# EUROPEAN PATENT APPLICATION

(11) **EP 4 568 306 A1**
(43) Date of publication of application: **11.06.2025**
(21) Application number: 23850327.0
(22) Date of filing: 26.07.2023
(51) Int. Cl.: H04W 8/02, H04W 8/18, H04W 76/10, H04W 76/30

(54) **LBO MODE PDU SESSION**

(30) Priority: 04.08.2022 US 202263394975 P
(71) Applicant: LG Electronics Inc., Yeongdeungpo-gu Seoul 07336 (KR)
(72) Inventor: KIM, Hongsuk, Seoul 06772 (KR); KIM, Hyunsook, Seoul 06772 (KR); KIM, Laeyoung, Seoul 06772 (KR); KIM, Jaewoo, Seoul 06772 (KR); YOUN, Myungjune, Seoul 06772 (KR)
(74) Representative: Frenkel, Matthias Alexander
(86) International application number: PCT/KR2023/010814
(87) International publication number: WO 2024/029821

(57) **Abstract**

A disclosure of the present specification provides a method for performing communication by a UDM. The method may comprise the steps of: receiving a registration message related to a PDU session of a UE from an SMF; receiving a CM update request message from the SMF; and transmitting, to an AMF, a notification message including LBO roaming information indicating that LBO roaming is allowed for a DNN or S-NSSAI.

## Description

### TECHNICAL FIELD

The present specification relates to a mobile communication.

### BACKGROUND ART

3rd Generation Partnership Project (3GPP) Long-Term Evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in International Telecommunication Union (ITU) and 3GPP to develop requirements and specifications for New Radio (NR) systems. 3GPP has to identify and develop the technology components needed for successfully standardizing the new RAT timely satisfying both the urgent market needs, and the more long-term requirements set forth by the ITU Radio communication sector (ITU-R) International Mobile Telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced Mobile BroadBand (eMBB), massive Machine Type Communications (mMTC), Ultra-Reliable and Low Latency Communications (URLLC), etc. The NR shall be inherently forward compatible.

In a roaming situation, H-SMF may decide to reconnect an established home routed PDU session to the PDU session in LBO mode within the VPLMN. However, the prior art does not discuss how to switch the PDU session to LBO mode.

### DISCLOSURE

### TECHNICAL SOLUTION

In one aspect, a method is provided for performing communication by a UDM. The method may include: receiving a registration message related to a PDU session of the UE from the SMF; receiving a CM update request message from the SMF; and sending a notification message comprising LBO roaming information to the AMF.

In another aspect, an apparatus implementing the above method is provided.

In one aspect, a method is provided for performing a communication by an SMF. The method may include sending a registration message to the UDM relating to a PDU session of the UE; determining that LBO roaming to the VPLMN is required for the UE; and sending a CM update request message to the UDM.

In another aspect, an apparatus implementing the above method is provided.

In one aspect, a method is provided for a UE to perform a communication. The method may include: sending a PDU session establishment request message to an SMF related to a first PDU session of the UE; receiving a PDU session establishment acceptance message from the SMF; receiving a PDU session release command message comprising cause information from the SMF; and sending a PDU session establishment request message to the SMF to establish a second PDU session, based on the cause information.

In another aspect, an apparatus implementing the above method is provided.

### BRIEF DESCRIPTION OF THE DRAWINGS

FIG. 1 shows an example of a communication system to which implementations of the present disclosure is applied.
FIG. 2 shows an example of wireless devices to which implementations of the present disclosure is applied.
FIG. 3 shows an example of UE to which implementations of the present disclosure is applied.
FIG. 4 shows an example of 5G system architecture to which implementations of the present disclosure is applied.
FIGS. 5 and 6 show an example of a PDU session establishment procedure to which implementations of the present disclosure is applied.
FIG. 7 illustrates an example of an EAS discovery procedure based on dynamic configuration of an LBO PDU session.
FIG. 8 illustrates an example of a procedure according to the first example of the disclosure.
FIG. 9 illustrates an example of a procedure according to the second example of the disclosure.
FIG. 10 illustrates an example of a procedure according to one embodiment of the disclosure.

### MODE FOR INVENTION

The following techniques, apparatuses, and systems may be applied to a variety of wireless multiple access systems. Examples of the multiple access systems include a Code Division Multiple Access (CDMA) system, a Frequency Division Multiple Access (FDMA) system, a Time Division Multiple Access (TDMA) system, an Orthogonal Frequency Division Multiple Access (OFDMA) system, a Single Carrier Frequency Division Multiple Access (SC-FDMA) system, and a Multi Carrier Frequency Division Multiple Access (MC-FDMA) system. CDMA may be embodied through radio technology such as Universal Terrestrial Radio Access (UTRA) or CDMA2000. TDMA may be embodied through radio technology such as Global System for Mobile communications (GSM), General Packet Radio Service (GPRS), or Enhanced Data rates for GSM Evolution (EDGE). OFDMA may be embodied through radio technology such as Institute of Electrical and Electronics Engineers (IEEE) 802.11 (Wi-Fi), IEEE 802.16 (WiMAX), IEEE 802.20, or Evolved UTRA (E-UTRA). UTRA is a part of a Universal Mobile Telecommunications System (UMTS). 3rd Generation Partnership Project (3GPP) Long-Term Evolution (LTE) is a part of Evolved UMTS (E-UMTS) using E-UTRA. 3GPP LTE employs OFDMA in downlink (DL) and SC-FDMA in uplink (UL). Evolution of 3GPP LTE includes LTE-Advanced (LTE-A), LTE-A Pro, and/or 5G New Radio (NR).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

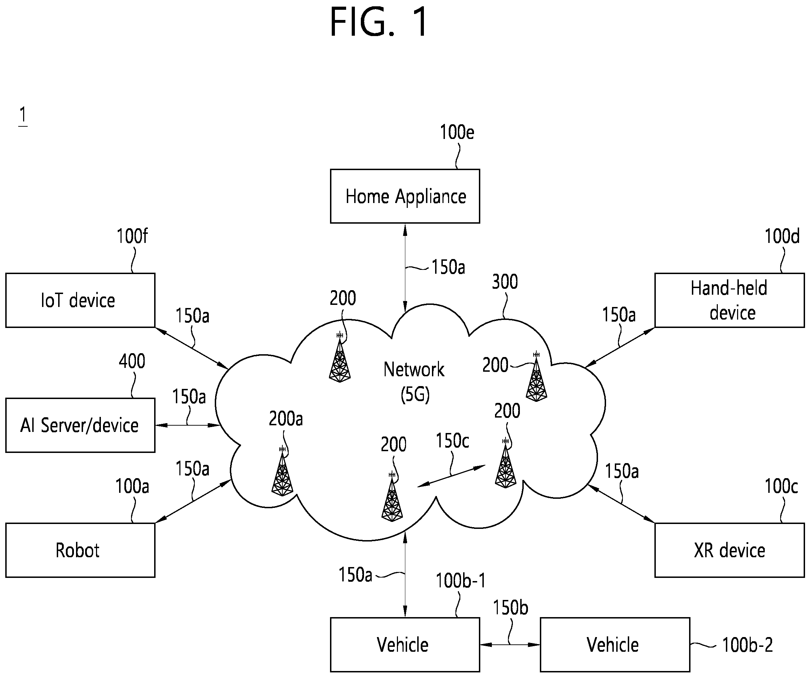

FIG. 1 shows an example of a communication system to which implementations of the present disclosure is applied.

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced Mobile BroadBand (eMBB), (2) a category of massive Machine Type Communication (mMTC), and (3) a category of Ultra-Reliable and Low Latency Communications (URLLC).

Referring to FIG. 1, the communication system 1 includes wireless devices 100a to 100f, Base Stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using Radio Access Technology (RAT) (e.g., 5G NR or LTE) and may be referred to as communication/radio/5G devices. The wireless devices 100a to 100f may include, without being limited to, a robot 100a, vehicles 100b-1 and 100b-2, an eXtended Reality (XR) device 100c, a hand-held device 100d, a home appliance 100e, an Internet-of-Things (IoT) device 100f, and an Artificial Intelligence (AI) device/server 400. For example, the vehicles may include a vehicle having a wireless communication function, an autonomous driving vehicle, and a vehicle capable of performing communication between vehicles. The vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called User Equipments (UEs). A UE may include, for example, a cellular phone, a smartphone, a laptop computer, a digital broadcast terminal, a Personal Digital Assistant (PDA), a Portable Multimedia Player (PMP), a navigation system, a slate Personal Computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or Device-to-Device (D2D) communication) 150b, inter-base station communication 150c (e.g., relay, Integrated Access and Backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

NR supports multiples numerologies (and/or multiple Sub-Carrier Spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., Frequency Range 1 (FR1) and Frequency Range 2 (FR2). The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter Wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include NarrowBand IoT (NB-IoT) technology for low-power communication as well as LTE, NR and 6G. For example, NB-IoT technology may be an example of Low Power Wide Area Network (LPWAN) technology, may be implemented in specifications such as LTE Cat NB1 and/or LTE Cat NB2, and may not be limited to the-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced MTC (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the-mentioned names. Additionally and/or alternatively, the radio communication technologies implemented in the wireless devices in the present disclosure may include at least one of ZigBee, Bluetooth, and/or LPWAN which take into account low-power communication, and may not be limited to the-mentioned names. For example, ZigBee technology may generate Personal Area Networks (PANs) related to small/low-power digital communication based on various specifications such as IEEE 802.15.4 and may be called various names.

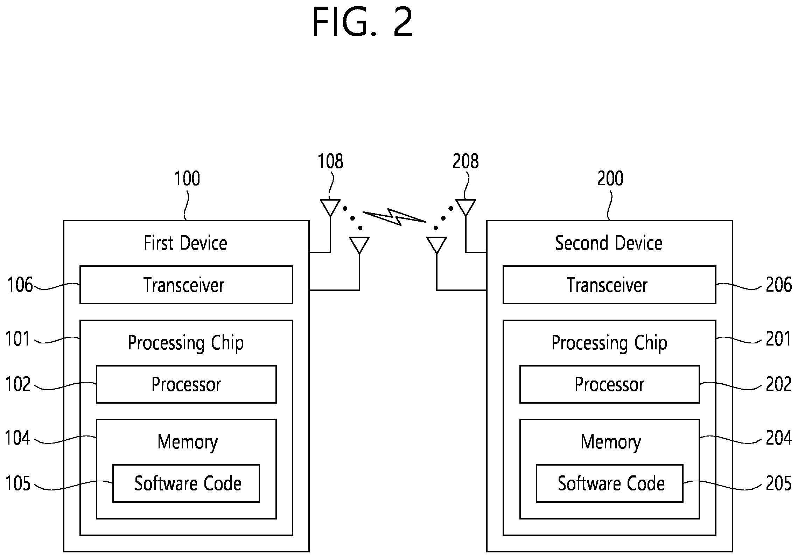

FIG. 2 shows an example of wireless devices to which implementations of the present disclosure is applied.

In FIG. 2, The first wireless device 100 and/or the second wireless device 200 may be implemented in various forms according to use cases/services. For example, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1. The first wireless device 100 and/or the second wireless device 200 may be configured by various elements, devices/parts, and/or modules.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. Additional and/or alternatively, the memory 104 may be placed outside of the processing chip 101.

The processor 102 may control the memory 104 and/or the transceiver 106 and may be adapted to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a firmware and/or a software code 105 which implements codes, commands, and/or a set of commands that, when executed by the processor 102, perform the descriptions, functions, procedures, suggestions, methods and/or operational flowcharts disclosed in the present disclosure. For example, the firmware and/or the software code 105 may implement instructions that, when executed by the processor 102, perform the descriptions, functions, procedures, suggestions, methods and/or operational flowcharts disclosed in the present disclosure. For example, the firmware and/or the software code 105 may control the processor 102 to perform one or more protocols. For example, the firmware and/or the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with Radio Frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. Additional and/or alternatively, the memory 204 may be placed outside of the processing chip 201.

The processor 202 may control the memory 204 and/or the transceiver 206 and may be adapted to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a firmware and/or a software code 205 which implements codes, commands, and/or a set of commands that, when executed by the processor 202, perform the descriptions, functions, procedures, suggestions, methods and/or operational flowcharts disclosed in the present disclosure. For example, the firmware and/or the software code 205 may implement instructions that, when executed by the processor 202, perform the descriptions, functions, procedures, suggestions, methods and/or operational flowcharts disclosed in the present disclosure. For example, the firmware and/or the software code 205 may control the processor 202 to perform one or more protocols. For example, the firmware and/or the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as Physical (PHY) layer, Media Access Control (MAC) layer, Radio Link Control (RLC) layer, Packet Data Convergence Protocol (PDCP) layer, Radio Resource Control (RRC) layer, and Service Data Adaptation Protocol (SDAP) layer). The one or more processors 102 and 202 may generate one or more Protocol Data Units (PDUs), one or more Service Data Unit (SDUs), messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. For example, the one or more processors 102 and 202 may be configured by a set of a communication control processor, an Application Processor (AP), an Electronic Control Unit (ECU), a Central Processing Unit (CPU), a Graphic Processing Unit (GPU), and a memory control processor. The one or more memories 104 and 204 may be connected to the one or more processors 102 and 202 and store various types of data, signals, messages, information, programs, code, instructions, and/or commands. The one or more memories 104 and 204 may be configured by Random Access Memory (RAM), Dynamic RAM (DRAM), Read-Only Memory (ROM), electrically Erasable Programmable Read-Only Memory (EPROM), flash memory, volatile memory, non-volatile memory, hard drive, register, cash memory, computer-readable storage medium, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208. Additionally and/or alternatively, the one or more transceivers 106 and 206 may include one or more antennas 108 and 208. The one or more transceivers 106 and 206 may be adapted to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and down-convert the OFDM signals into OFDM baseband signals by their (analog) oscillators and/or filters under the control of the one or more processors 102 and 202.

Although not shown in FIG. 2, the wireless devices 100 and 200 may further include additional components. The additional components 140 may be variously configured according to types of the wireless devices 100 and 200. For example, the additional components 140 may include at least one of a power unit/battery, an Input/Output (I/O) device (e.g., audio I/O port, video I/O port), a driving device, and a computing device. The additional components 140 may be coupled to the one or more processors 102 and 202 via various technologies, such as a wired or wireless connection.

In the implementations of the present disclosure, a UE may operate as a transmitting device in Uplink (UL) and as a receiving device in Downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be adapted to perform the UE operation according to an implementation of the present disclosure or control the transceiver(s) 106 to perform the UE operation according to an implementation of the present disclosure. The processor(s) 202 connected to, mounted on or launched in the second wireless device 200 may be adapted to perform the BS operation according to an implementation of the present disclosure or control the transceiver(s) 206 to perform the BS operation according to an implementation of the present disclosure.

In the present disclosure, a BS is also referred to as a node B (NB), an eNode B (eNB), or a gNB.

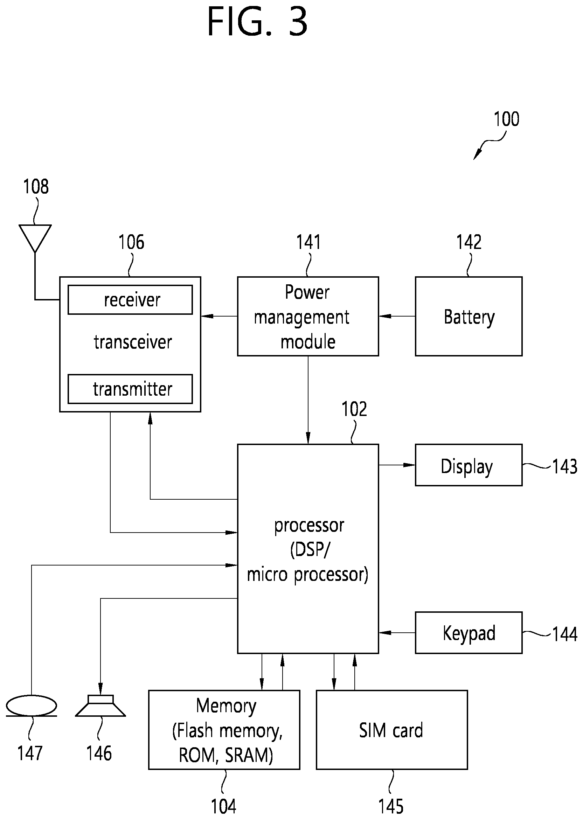

FIG. 3 shows an example of UE to which implementations of the present disclosure is applied.

Referring to FIG. 3, a UE 100 may correspond to the first wireless device 100 of FIG. 2.

A UE 100 includes a processor 102, a memory 104, a transceiver 106, one or more antennas 108, a power management module 141, a battery 142, a display 143, a keypad 144, a Subscriber Identification Module (SIM) card 145, a speaker 146, and a microphone 147.

The processor 102 may be adapted to implement the descriptions, functions, procedures, suggestions, methods and/or operational flowcharts disclosed in the present disclosure. The processor 102 may be adapted to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of DSP, CPU, GPU, a modem (modulator and demodulator). An example of the processor 102 may be found in SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 141 manages power for the processor 102 and/or the transceiver 106. The battery 142 supplies power to the power management module 141.

The display 143 outputs results processed by the processor 102. The keypad 144 receives inputs to be used by the processor 102. The keypad 144 may be shown on the display 143.

The SIM card 145 is an integrated circuit that is intended to securely store the International Mobile Subscriber Identity (IMSI) number and its related key, which are used to identify and authenticate subscribers on mobile telephony devices (such as mobile phones and computers). It is also possible to store contact information related to many SIM cards.

The speaker 146 outputs sound-related results processed by the processor 102. The microphone 147 receives sound-related inputs to be used by the processor 102.

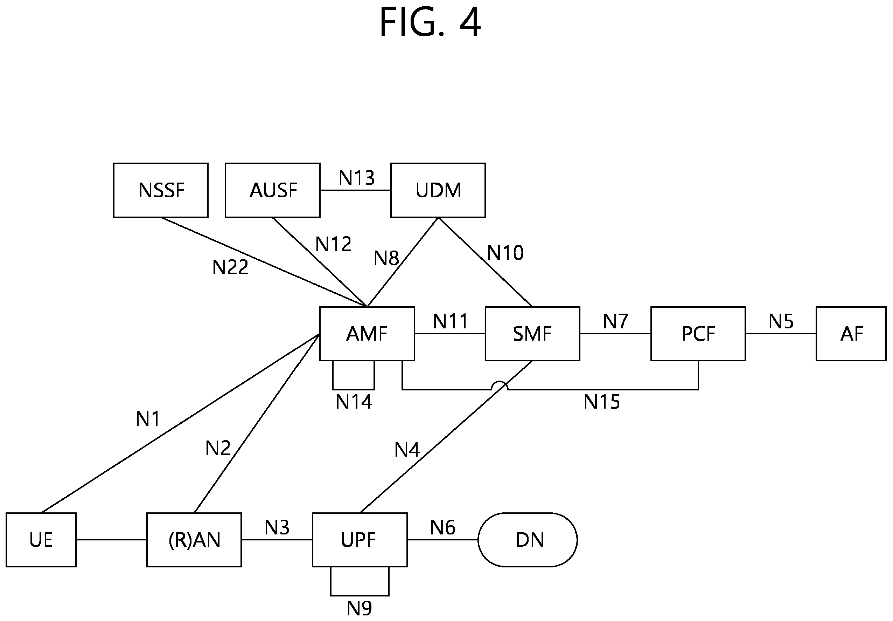

FIG. 4 shows an example of 5G system architecture to which implementations of the present disclosure is applied.

The 5G system (5GS) architecture consists of the following network functions (NF).
- Authentication Server Function (AUSF)
- Access and Mobility Management Function (AMF)
- Data Network (DN), e.g., operator services, Internet access or 3rd party services
- Unstructured Data Storage Function (UDSF)
- Network Exposure Function (NEF)
- Intermediate NEF (I-NEF)
- Network Repository Function (NRF)
- Network Slice Selection Function (NSSF)
- Policy Control Function (PCF)
- Session Management Function (SMF)
- Unified Data Management (UDM)
- Unified Data Repository (UDR)
- User Plane Function (UPF)
- UE radio Capability Management Function (UCMF)
- Application Function (AF)
- User Equipment (UE)
- (Radio) Access Network ((R)AN)
- 5G-Equipment Identity Register (5G-EIR)
- Network Data Analytics Function (NWDAF)
- CHarging Function (CHF)
- Furthermore, the following network functions may be considered.
- Non-3GPP InterWorking Function (N3IWF)
- Trusted Non-3GPP Gateway Function (TNGF)
- Wireline Access Gateway Function (W-AGF)

FIG. 4 depicts the 5G system architecture in the non-roaming case, using the reference point representation showing how various network functions interact with each other.

In FIG. 4, for the sake of clarity of the point-to-point diagrams, the UDSF, NEF and NRF have not been depicted. However, all depicted Network Functions can interact with the UDSF, UDR, NEF and NRF as necessary.

For clarity, the UDR and its connections with other NFs, e.g., PCF, are not depicted in FIG. 4. For clarity, the NWDAF and its connections with other NFs, e.g., PCF, are not depicted in FIG. 4.

The 5G system architecture contains the following reference points:
- N1: Reference point between the UE and the AMF.
- N2: Reference point between the (R)AN and the AMF.
- N3: Reference point between the (R)AN and the UPF.
- N4: Reference point between the SMF and the UPF.
- N6: Reference point between the UPF and a Data Network.
- N9: Reference point between two UPFs.

The following reference points show the interactions that exist between the NF services in the NFs.
- N5: Reference point between the PCF and an AF.
- N7: Reference point between the SMF and the PCF.
- N8: Reference point between the UDM and the AMF.
- N10: Reference point between the UDM and the SMF.
- N11: Reference point between the AMF and the SMF.
- N12: Reference point between the AMF and the AUSF.
- N13: Reference point between the UDM and the AUSF.
- N14: Reference point between two AMFs.
- N15: Reference point between the PCF and the AMF in the case of non-roaming scenario, PCF in the visited network and AMF in the case of roaming scenario.
- N16: Reference point between two SMFs, (in roaming case between SMF in the visited network and the SMF in the home network).
- N22: Reference point between the AMF and the NSSF.

In some cases, a couple of NFs may need to be related to each other to serve a UE.

PDU session establishment procedure is described. Section 4.3.2 of 3GPP TS 23.502 V16.3.0 (2019-12) can be referenced.

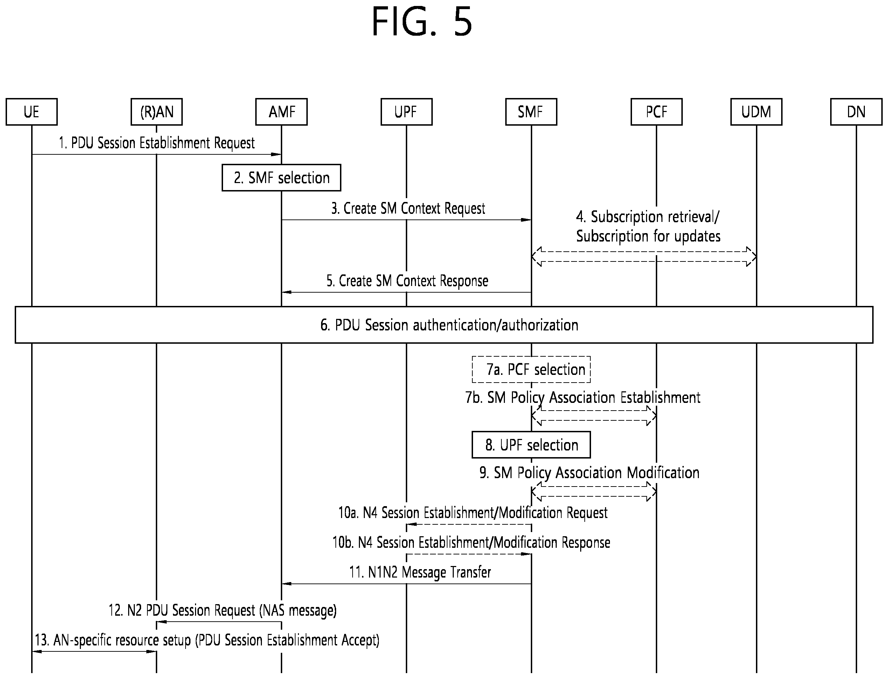

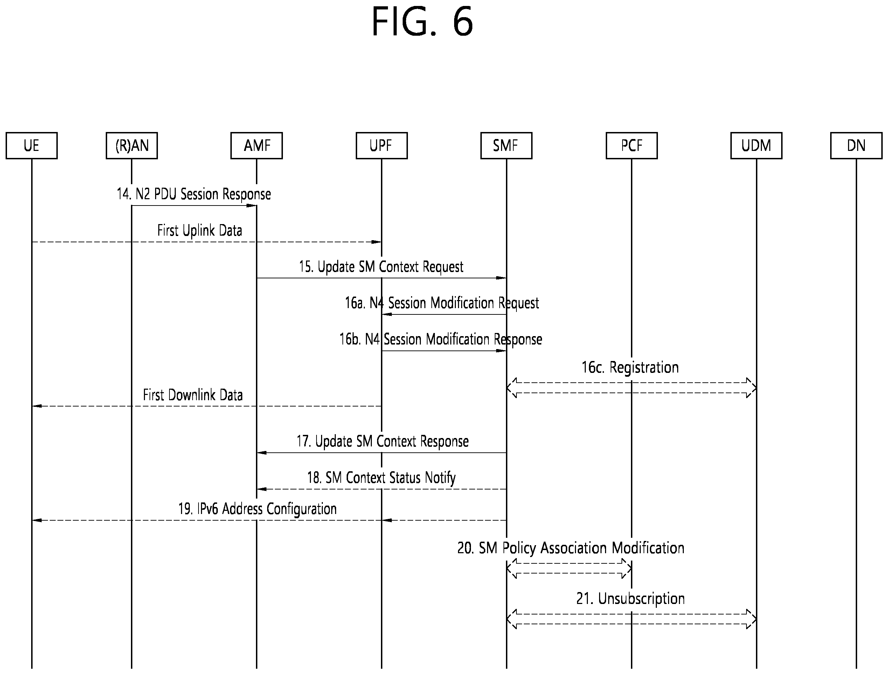

**FIGS. 5** **and** **6** **show an example of a PDU session establishment procedure to which implementations of the present disclosure is applied.**

A PDU session establishment may correspond to:
- a UE initiated PDU session establishment procedure.
- a UE initiated PDU session handover between 3GPP and non-3GPP.
- a UE initiated PDU session handover from EPS to 5GS.
- a network triggered PDU session establishment procedure.

A PDU session may be associated either (a) with a single access type at a given time, i.e., either 3GPP access or non-3GPP access, or (b) simultaneously with multiple access types, i.e., one 3GPP access and one non-3GPP access. A PDU session related to multiple access types is referred to as multi access PDU (MA PDU) session and it may be requested by access traffic steering, switching, splitting (ATSSS)-capable UEs.

FIGS. 5 and 6 specify the procedures for establishing PDU sessions related to a single access type at a given time.

The procedure shown in FIGS. 5 and 6 assumes that the UE has already registered on the AMF thus unless the UE is emergency registered the AMF has already retrieved the user subscription data from the UDM.

First, procedures of FIG. 5 are described.
(1) Step 1: In order to establish a new PDU session, the UE generates a new PDU session ID.

The UE initiates the UE requested PDU session establishment procedure by the transmission of a NAS message including a PDU Session Establishment Request message within the N1 SM container. The PDU Session Establishment Request message includes a PDU session ID, Requested PDU Session Type, a Requested session and service continuity (SSC) mode, 5GSM Capability, protocol configuration options (PCO), SM PDU DN Request Container, UE Integrity Protection Maximum Data Rate, etc.

The Request Type indicates "Initial request" if the PDU session establishment is a request to establish a new PDU session and indicates "Existing PDU Session" if the request refers to an existing PDU session switching between 3GPP access and non-3GPP access or to a PDU session handover from an existing packet data network (PDN) connection in EPC. The Request Type indicates "Emergency Request" if the PDU session establishment is a request to establish a PDU session for emergency services. The Request Type indicates "Existing Emergency PDU Session" if the request refers to an existing PDU session for emergency services switching between 3GPP access and non-3GPP access or to a PDU session handover from an existing PDN connection for emergency services in EPC.

The UE includes the S-NSSAI from the Allowed NSSAI of the current access type. If the Mapping of Allowed NSSAI was provided to the UE, the UE shall provide both the S-NSSAI of the visited PLMN (VPLMN) from the Allowed NSSAI and the corresponding S-NSSAI of the HPLMN from the Mapping Of Allowed NSSAI.

(2) Step 2: The AMF selects an SMF. If the Request Type indicates "Initial request" or the request is due to handover from EPS or from non-3GPP access serving by a different AMF, the AMF stores an association of the S-NSSAI(s), the data network name (DNN), the PDU session ID, the SMF ID as well as the Access Type of the PDU session.

If the Request Type is "initial request" and if the Old PDU session ID indicating the existing PDU session is also included in the message, the AMF selects an SMF and stores an association of the new PDU Session ID, the S-NSSAI(s), the selected SMF ID as well as Access Type of the PDU Session.

If the Request Type indicates "Existing PDU Session", the AMF selects the SMF based on SMF-ID received from UDM. The AMF updates the Access Type stored for the PDU session.

If the Request Type indicates "Existing PDU Session" referring to an existing PDU session moved between 3GPP access and non-3GPP access, then if the serving PLMN S-NSSAI of the PDU session is present in the Allowed NSSAI of the target access type, the PDU session establishment procedure can be performed in the following cases:
- the SMF ID corresponding to the PDU session ID and the AMF belong to the same PLMN;
- the SMF ID corresponding to the PDU session ID belongs to the HPLMN;

Otherwise the AMF shall reject the PDU session establishment request with an appropriate reject cause.

The AMF shall reject a request coming from an emergency registered UE and the Request Type indicates neither "Emergency Request" nor "Existing Emergency PDU Session".

(3) Step 3: If the AMF does not have an association with an SMF for the PDU session ID provided by the UE (e.g., when Request Type indicates "initial request"), the AMF invokes Create SM Context Request procedure (e.g., Nsmf_PDUSession_CreateSMContext Request). If the AMF already has an association with an SMF for the PDU session ID provided by the UE (e.g., when Request Type indicates "existing PDU Session"), the AMF invokes Update SM Context Request procedure (e.g., Nsmf_PDUSession_UpdateSMContext Request).

The AMF sends the S-NSSAI of the serving PLMN from the Allowed NSSAI to the SMF. For roaming scenario in local breakout (LBO), the AMF also sends the corresponding S-NSSAI of the HPLMN from the Mapping Of Allowed NSSAI to the SMF.

The AMF ID is the UE's GUAMI which uniquely identifies the AMF serving the UE. The AMF forwards the PDU session ID together with the N1 SM container including the PDU Session Establishment Request message received from the UE. The generic public subscription identifier (GPSI) shall be included if available at AMF.

The AMF provides the PEI instead of the SUPI when the UE in limited service state has registered for emergency services without providing a SUPI. In case the UE in limited service state has registered for Emergency services with a SUPI but has not been authenticated, the AMF indicates that the SUPI has not been authenticated. The SMF determines that the UE has not been authenticated when it does not receive a SUPI for the UE or when the AMF indicates that the SUPI has not been authenticated.

The AMF may include a PCF ID in the Nsmf_PDUSession_CreateSMContext Request. This PCF ID identifies the home PCF (H-PCF) in the non-roaming case and the visited PCF (V-PCF) in the LBO roaming case.

(4) Step 4: If session management subscription data for corresponding SUPI, DNN and S-NSSAI of the HPLMN is not available, then SMF may retrieve the session management subscription data from the UDM and subscribes to be notified when this subscription data is modified.

(5) Step 5: The SMF transmits either Create SM Context Response message (e.g., Nsmf_PDUSession_CreateSMContext Response) or Update SM Context Response message (e.g., Nsmf_PDUSession_UpdateSMContext Response) to the AMF, depending on the request received in step 3.

If the SMF received Nsmf_PDUSession_CreateSMContext Request in step 3 and the SMF is able to process the PDU session establishment request, the SMF creates an SM context and responds to the AMF by providing an SM Context ID.

When the SMF decides to not accept to establish a PDU session, the SMF rejects the UE request via NAS SM signaling including a relevant SM rejection cause by responding to the AMF with Nsmf_PDUSession_CreateSMContext Response. The SMF also indicates to the AMF that the PDU session ID is to be considered as released, the SMF proceeds to step 20 below and the PDU session establishment procedure is stopped.

(6) Step 6: Optional secondary authentication/authorization may be performed.

(7a) Step 7a: If dynamic policy and charging control (PCC) is to be used for the PDU session, the SMF may perform PCF selection.

(7b) Step 7b: The SMF may perform an SM Policy Association Establishment procedure to establish an SM Policy association with the PCF and get the default PCC rules for the PDU session.

(8) Step 8: The SMF selects one or more UPFs.

(9) Step 9: The SMF may perform an SMF initiated SM Policy Association Modification procedure to provide information related to the policy control request trigger condition(s) that have been met.

(10) Step 10: If Request Type indicates "initial request", the SMF may initiate an N4 Session Establishment procedure with the selected UPF. Otherwise, the SMF may initiate an N4 Session Modification procedure with the selected UPF

In step 10a, the SMF may send an N4 Session Establishment/Modification Request to the UPF and provides packet detection, enforcement and reporting rules to be installed on the UPF for this PDU session. In step 10b, the UPF may acknowledge by sending an N4 Session Establishment/Modification Response.

(11) Step 11: The SMF transmits a N1N2Message Transfer message (e.g., Namf_Communication_N1N2MessageTransfer) to the AMF.

The N1N2Message Transfer message may include N2 SM information. The N2 SM information carries information that the AMF shall forward to the (R)AN which may include:
- The CN Tunnel Info: Core network address(es) of the N3 tunnel corresponding to the PDU session;
- One or multiple quality of service (QoS) profiles and the corresponding QoS flow IDs (QFIs);
- The PDU session ID: indicate to the UE the association between (R)AN resources and a PDU session for the UE.
- S-NSSAI with the value for the serving PLMN (i.e., the HPLMN S-NSSAI or, in LBO roaming case, the VPLMN S-NSSAI).
- User Plane Security Enforcement information determined by the SMF.
- If the User Plane Security Enforcement information indicates that integrity protection is "Preferred" or "Required(or Mandatory)", the SMF also includes the UE Integrity Protection Maximum Data Rate as received in the PDU Session Establishment Request message.
- Redundancy sequence number (RSN) parameter

The N1N2Message Transfer message may include N1 SM container. The N1 SM container contains the PDU Session Establishment Accept message that the AMF shall provide to the UE. The PDU Session Establishment Accept message includes S-NSSAI from the Allowed NSSAI. For LBO roaming scenario, the PDU Session Establishment Accept message includes the S-NSSAI from the Allowed NSSAI for the VPLMN and also it includes the corresponding S-NSSAI of the HPLMN from the Mapping Of Allowed NSSAI that SMF received in step 3.

Multiple QoS Rules, QoS flow level, QoS parameters if needed for the QoS Flow(s) related to those QoS rule(s) and QoS Profiles may be included in the PDU Session Establishment Accept message within the N1 SM container and in the N2 SM information.

If the PDU session establishment failed anywhere between step 5 and step 11, then the N1N2Message Transfer message shall include the N1 SM container with a PDU Session Establishment Reject message and shall not include any N2 SM information. The (R)AN sends the NAS message including the PDU Session Establishment Reject message to the UE. In this case, steps 12-17 are skipped.

(12) Step 12: The AMF sends the NAS message including PDU Session ID and PDU Session Establishment Accept message targeted to the UE and the N2 SM information received from the SMF within the N2 PDU Session Request message to the (R)AN.

(13) Step 13: The (R)AN may issue AN specific signaling exchange with the UE that is related with the information received from SMF. For example, in case of a NG-RAN, an RRC connection reconfiguration may take place with the UE establishing the necessary NG-RAN resources related to the QoS rules for the PDU session request received in step 12.

The (R)AN forwards the NAS message (PDU Session ID, N1 SM container (PDU Session Establishment Accept message)) provided in step 12 to the UE. The (R)AN shall only provide the NAS message to the UE if the AN specific signaling exchange with the UE includes the (R)AN resource additions associated to the received N2 command.

If the N2 SM information is not included in the step 11, then the following steps 14 to 16b and step 17 are omitted.

Now, procedures of FIG. 6, which follow the procedures of FIG. 5, are described.

(14) Step 14: The (R)AN transmits a N2 PDU Session Response message to the AMF. The N2 PDU Session Response message may include PDU session ID, Cause, N2 SM information (PDU Session ID, AN Tunnel Info, List of accepted/rejected QFI(s), User Plane Enforcement Policy Notification)), etc.

(15) Step 15: The AMF transmits an Update SM Context Request message (e.g., Nsmf_PDUSession_UpdateSMContext Request) to the SMF. The AMF forwards the N2 SM information received from (R)AN to the SMF.

(16a) Step S16a: The SMF initiates an N4 Session Modification procedure with the UPF. The SMF provides AN Tunnel Info to the UPF as well as the corresponding forwarding rules.

(16b) Step S16b: The UPF provides an N4 Session Modification Response to the SMF.

After this step, the UPF may deliver any DL packets to the UE that may have been buffered for this PDU session.

(16c) Step 16c: If the SMF has not yet registered for this PDU session, then the SMF may register with the UDM for a given PDU Session.

(17) Step 17: The SMF transmits an Update SM Context Response message (e.g., Nsmf_PDUSession_UpdateSMContext Response) to the AMF.

After this step, the AMF forwards relevant events subscribed by the SMF.

(18) Step 18: If during the procedure, any time after step 5, the PDU session establishment is not successful, the SMF may inform the AMF by invoking Nsmf_PDUSession_SMContextStatusNotify (Release). The SMF may also release any N4 session(s) created, any PDU session address if allocated (e.g., IP address) and release the association with PCF, if any. In this case, step 19 is skipped.

(19) Step 19: In the case of PDU Session Type IPv6 or IPv4v6, the SMF may generate an IPv6 Router Advertisement and send it to the UE.

(20) Step 20: The SMF may perform SMF initiated SM Policy Association Modification.

(21) Step 21: If the PDU Session establishment failed after step 4, the SMF may unsubscribe to the modifications of session management subscription data, if the SMF is no more handling a PDU session of the UE.

A variety of issues for edge computing enhancements require solutions to support 5GS. Among them, depending on the issue (or problem) such as the following example (e.g., Accessing EHE in a VPLMN when roaming), it is necessary to discuss how to support the objective to provide Edge Computing services to terminals in roaming scenarios.

Describe an example of an issue. An example of an issue might be Accessing EHE in a VPLMN when roaming. For example, in a roaming situation, there is a problem accessing EHE in a VPLMN.

The purpose of this issue is to define 5GS enhancements to support UE access to EHE in VPLMN.

Two scenarios can exist (i.e., UE accessing the EHE of the VPLMN via a local breakout (LBO) Packet Data Unit (PDU) session and UE accessing the EHE of the VPLMN via a PDU session set to HR).

For scenarios that use LBO PDU sessions, potential solutions may address the following:
- How to establish LBO PDU sessions towards the correct S-NSSAI/DNN pair to access the EHE in the VPLMN;
- How to support edge computing related procedures such as EAS (re-)discovery.

For scenarios that use PDU sessions with PSA in the HPLMN, potential solutions should address the following:
- How to authorize PDU sessions to support local traffic routing to access the EHE from the VPLMN;
- Whether and how to support charging for the local traffic of PDU sessions that support routing local traffic to access EHE in the VPLMN;
- How to support edge computing related procedures such as EAS (re)discovery.
- How to ensure appropriate policy controls and QoS enforcement;
- Potential impact on policy and QoS controls;
- How to configure the VPLMN Edge Configuration Server (ECS) address to the UE in roaming scenarios;
- How to support edge relocation in roaming scenarios.

NOTE: Latency needs to be considered and addressed for all scenarios.

For this issue, the following scenarios may be considered

For roaming UEs, they may need to access EHE in the VPLMN to fulfill use cases that require edge computing. Two main scenarios may be considered
1) UEs accessing V-EHE via Local Breakout (LBO) PDU sessions:
   This scenario supports all connection models and it is assumed that LBO PDU sessions are used to access the EHE of the VPLMN for EC applications.

The LBO PDU session allows the UE to access the EHE of the VPLMN.

NOTE 1: Two different PDU sessions are required to access the EHE of the VPLMN and the home DN of the HPLMN simultaneously.

### 2) UE accessing the V-EHE via a Home Routed (HR) PDU session (i.e., using PSA in HPLMN):

In this scenario, it is assumed that session breakout for HR PDU sessions is used to access the EHE of the VPLMN for EC applications.

With a single PDU session, the UE can also access the EHE of the VPLMN and the DN of the HPLMN.

NOTE 2: Using a single PDU session and (DNN+S-NSSAI), both EC and non-EC applications can be supported in roaming or non-roaming cases.

To support such a PDU session, a way for the UE to access the V-EHE via HR PDU session shall be studied. Two sub-scenarios can be considered:
2.1) The HPLMN has knowledge of the EAS deployment information of the VPLMN for a particular service. The HPLMN triggers EAS discovery and local traffic routing on the VPLMN.
2.2) The HPLMN has no knowledge of the VPLMN's EAS deployment information. The VPLMN triggers EAS discovery and local traffic routing on the VPLMN.

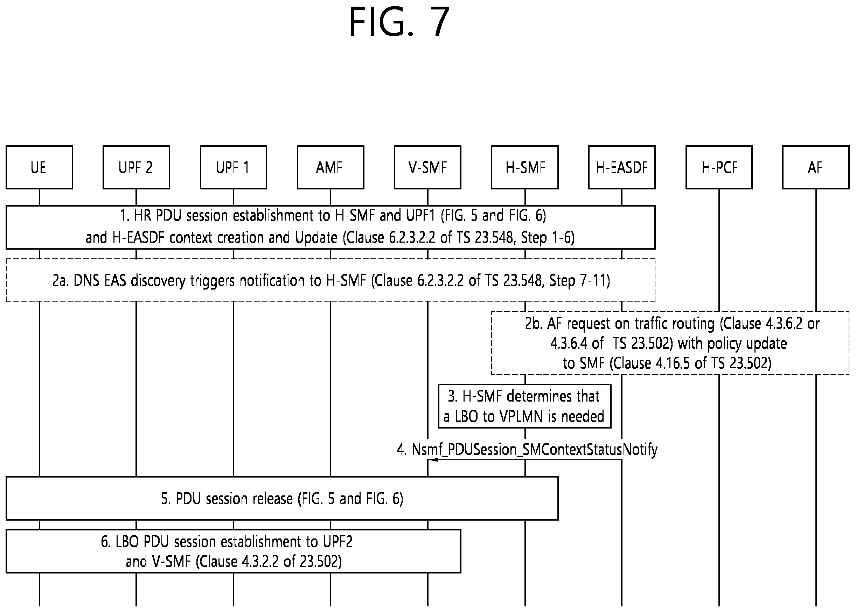

For the above issues, solutions such as the example below have been discussed. For example, for efficient edge computing in the presence of home-routed PDU sessions, the example based on FIG. 7 below describes a dynamic switching to LBO PDU sessions.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

**FIG. 7** **illustrates an example of an EAS discovery procedure based on dynamic configuration of an LBO PDU session.**

Referring to the example in FIG. 7, an example of EAS discovery is described. The following example describes EAS discovery based on the dynamic setup of an LBO PDU session. In one example, EAS discovery with dynamic setup of a LBO PDU Session is described.

A situation is assumed where the UE accesses the EHE of the VPLMN via an LBO PDU session.

The UE may initially connect to the HPLMN. The transition to the LBO PDU session may be performed based on a trigger to the H-SMF. The trigger can be, for example, a DNS query of the UE towards the EC FQDN or an AF impact of the traffic routing to the UE. The latter trigger may also be issued by the VPLMN. The H-SMF may determine that an LBO PDU session to the VPLMN is required based on the following examples:
- The EDIs available within the HPLMN for a given FQDN and the FQDN within the UE DNS, where the DNAI is related to a specific PLMN in the EDI. That is, there is related information in the EDI that indicates which PLMN is related to the DNAI;
- DNAI in N6 routing information, where the DNAI in the N6 routing information has the associated PLMN information from the AF impact of traffic routing;
- Policy information available to the H-SMF regarding the requested FQDN or DNAI, which may be provided by the H-PCF.

The H-SMF can then send an LBO session acknowledgment indication to the AMF and then terminate the PDU session. If the H-SMF has previously received N6 routing information from the AF, the H-SMF may send an LBO session acknowledgment indication to the AMF, optionally including the DNAI.

NOTE 1: LBO session authorization indications can take precedence over subscription data.

NOTE 2: The HPLMN may verify that the UE does not have any URSP rules that conflict with the LBO authorization for this PDU session. For example, the PLMN can verify that there are no conflicting URSP rules, such as other traffic requiring HR PDU sessions should not be mapped to the same DNN and S-NSSAI.

NOTE 3: Termination of an HR PDU session affects traffic in progress on that PDU session (for example, TCP connections are lost and Quick UDP Internet Connections (QUIC) connections are interrupted until connections are re-established in a new LBO PDU session).

Based on the authorization indication received from the H-SMF, the AMF may decide to establish an LBO PDU session for the next UE PDU session establishment request from the UE for the same DNN and S-NSSAI. The AMF then may select the V-SMF based on its internal settings or the received target DNAI, and transmit the target DNAI corresponding to the DNAI received from the H-SMF to the V-SMF. Based on the DNAI information received from the AMF (if available) or policy information, the V-SMF may select a PSA and may also set the V-EASDF if dynamic EAS discovery is to be enabled.

In the example in Figure 7, for dynamic DNS-based EAS discovery, the H-EASDF of the HPLMN is assumed, and EAS discovery can be applied to any connection model of the V-PLMN in the following way
- For distributed anchor and multi-PDU session connection models, the V-SMF selects a local anchor for the current location of the UE based on the policy for this DNN. EAS (re)discovery may be performed as described in clause 6.2.2 of TS 23.548 V17.3.0;
- For session breakout, the V-SMF can select UL-CL/BP and local anchors based on the following
- If a DNAI is specified for N6 routing, the DNAI received from the AF in AF Impact of Traffic Routing; or
- The FQDN of the subsequent UE DNS query, as described in clause 6.2.3.2.2.2 of 3GPP TS 23.548 V17.3.0.

The V-SMF may initiate the termination of the LBO PDU session if the traffic to the EHE is interrupted.

The procedure in FIG. 7 is described in detail.
1. the procedure for establishing HR PDU sessions for H-SMF and UPF1 may be performed according to the procedure described in the examples of FIGS. 5 and 6. For dynamic DNS based reconnection, the H-EASDF allocation and rule transfer to EASDF may be performed according to steps TS 1-6 of the EAS Discovery procedure with EASDF for the session breakout connection model in 3GPP TS 23.548 V17.3.0 clause 6.2.3.2.2.2.2 of 3GPP TS 23.548 V17.3.0.
2a. [Conditional operation] The UE sends a DNS query message for the FQDN to the EASDF via the central PSA. Steps 7-11 of the procedure in clause 6.2.3.2.2.2 of 3GPP TS 23.548 V17.3.0 for EAS discovery procedure based on EASDF for session breakout connections are applied. For example, the H-EASDF checks the DNS query against the DNS processing rules of the DNS context and reports to the H-SMF. Similar to the EAS discovery procedure with dynamic PSDA deployment in clause 6.2.2.4 of 3GPP TS 23.548 V17.3.0, when the H-SMF decides to reconnect the PDU session, it instructs the H-EASDF to drop the DNS response.
2b. [Conditional operation] As specified in clause 4.3.6.2 or clause 4.3.6.4 of 3GPP TS 23.502 V17.5.0, the AF affects an existing PDU session by sending a traffic routing request to the UE. Therefore, the H-PCF may not be able to perform any of the functions specified in 3GPP TS 23.502 V17.5.0 by invoking the Npcf_SMPolicyControl_UpdateNotify service operation as described in step 5 and step 6 of clause 4.16.5 of 3GPP TS 23.
3. Based on 2a or 2b, as described earlier, the H-SMF determines that an LBO PDU session to the VPLMN is required.
4. The H-SMF may invoke the Nsmf_PDUSession_SMContextStatusNotify service operation to the AMF to indicate that the LBO is authorized for the next PDU session establishment for this UE, DNN and S-NSSAI. The H-SMF may optionally also send to the AMF the target DNAI for the local PSA to be selected in the UE's next PDU session request for the same DNN and S-NSSAI.
5. The H-SMF triggers the PDU session release as described in clause 4.3.4 of 3GPP TS 23.502 V17.5.0. The PDU session release procedure may be performed.
6. Based on the LBO authorization indication and target DNAI received in step 4, the UE for the same DNN and S-NSSAI may require the establishment of the next PDU session. In this case, the AMF may decide whether to establish an LBO PDU session to the appropriate V-SMF and UPF 2, as illustrated in the examples of Figures 5 and 6. EAS discovery is then performed as previously described.

The H-SMF may determine that an LBO PDU session to the VPLMN is required for a particular UE and PDU session. The H-SMF may send an indication to the AMF that the LBO is authorized for the next PDU session setup.

The AMF may switch to an LBO PDU session for a PDU session establishment request based on the LBO authorization indication previously received from the SMF.

According to the example referring to FIG. 7, in a roaming scenario, the H-SMF may decide to reconnect the PDU session to the LBO mode within the VPLMN for an already established home-routed PDU session. For example, the H-SMF may determine to reconnect the PDU Session to the LBO mode within the VPLMN for an already established Home-routed PDU Session, based on a policy update request from the H-PCF due to an AF request that causes traffic routing, or a DNS query report from the H-EASDF.

Based on this decision, the H-SMF may send an LBO authorization indication to the AMF to inform it that the LBO mode PDU session for the corresponding terminal, DNN, and S-NSSAI is authorized, and perform the conventional PDU session release procedure.

In a roaming scenario, a policy update request from the H-PCF due to an AF request that causes traffic routing, or a DNS query from the H-EASDF, the H-SMF may perform the following actions. For example, the H-SMF may decide to reconnect a PDU session to LBO mode in the VPLMN for an existing home-routed PDU session. Based on this decision, the H-SMF may notify the Serving AMF that the LBO mode PDU Session is authorized for its terminal, DNN, and S-NSSAI. The SMF may then perform dynamic switching of the existing home-routed PDU session to an LBO mode PDU session for edge computing.

To support dynamic switching to LBO mode PDU sessions, the Serving AMF located in the VPLMN (i.e., roaming network) must support the capability related to dynamic LBO mode PDU session switching. However, in practice, it is not feasible to upgrade all AMFs in all VPLMNs to support dynamic switching to LBO mode PDU sessions. To address this issue, a solution is needed to enable the network to support dynamic LBO mode PDU session switching without impacting the AMFs of the VPLMNs (e.g., by upgrading the existing AMFs).

Subsequently, when a connection request for a PDU Session corresponding to the same DNN and S-NSSAI is received, the AMF can check the LBO authorization indication. Then, the AMF may establish a PDU Session in LBO mode for Edge Computing and perform V-SMF and UPF selection.

In order to perform this operation of the AMF, the AMF may support the capability to identify the LBO authorization indication and the capability to establish an LBO PDU Session after identification. Based on these capabilities and functions, the AMF may then release the existing home-routed PDU session and establish a new LBO mode PDU session for the corresponding DNN, S-NSSAI. Accordingly, this operation of the AMF may not be possible in networks where conventional AMFs are used that do not support the capabilities related to dynamic LBO mode PDU session switching (e.g., the capability to identify the LBO authorization indication and the capability to establish an LBO PDU session after identification).

The various examples of the disclosure below describe examples of how to support dynamic switching from a roaming scenario to an LBO session for edge computing, with or without AMF support. For example, an approach is described to support dynamic switching from a roaming scenario to an LBO session for Edge Computing, regardless of whether the AMF supports the capability related to dynamic LBO mode PDU session switching (e.g., the capability to identify an LBO authorization indication and the capability to establish an LBO PDU session after identification).

In a roaming scenario, according to various examples of the disclosure, a method of supporting LBO mode PDU session reconnect for edge computing comprises a combination of one or more of the following operations/configurations/steps

As previously described in the example of FIG. 7, it is assumed in this specification that the H-SMF determines how to establish an LBO mode PDU session based on the support and capability of the serving PLMN to support operations for edge computing during the conventional home-routed PDU session establishment procedure. Supporting the operation for Edge Computing assumes, for example, that the AMF has the capability to identify the LBO authorization indication. Accordingly, it is assumed that the H-SMF can support releasing an existing Home-routed PDU session, determining how to switch to an LBO mode PDU session so that subsequent requests to open an HR PDU session for the same DNN/S-NSSAI can be opened in LBO mode, and performing the PDU session opening procedure.

An example of supporting dynamic LBO mode PDU session switching according to various examples of the disclosure includes releasing an already established home-routed PDU session and establishing an LBO mode PDU session for a corresponding DNN/S-NSSAI. An approach to support dynamic LBO mode PDU session switching according to various examples of the disclosure includes releasing an already established Home-routed PDU session and establishing an LBO mode PDU session for a corresponding DNN/S-NSSAI, regardless of whether the serving AMF supports capability related to dynamic LBO mode PDU session switching (e.g., the capability to identify an LBO authorization indication and/or the capability to establish an LBO PDU session after identification). Further, the method of supporting dynamic LBO mode PDU session switching according to various examples of the disclosure includes releasing an already established home-routed PDU session and establishing an LBO mode PDU session for a corresponding DNN/S-NSSAI, regardless of the LBO roaming information contained in the SMF Selection subscription data of the UE's subscriber information.

These procedures and/or messages may use existing procedures/messages, extend existing procedures/messages, or new procedures/messages may be defined and used.

In the disclosure of this specification, UE and terminal are used interchangeably. LBO mode PDU session reconnect, Dynamic LBO mode PDU session switching, LBO mode PDU session reestablishment, etc. are used interchangeably. LBO authorization indication, Dynamic LBO allowed indication, etc. are used interchangeably. LBO authorization indication, Dynamic LBO allowed indication, etc. are used interchangeably.

In the following, various examples of the disclosure will be described, focusing on what is proposed and how it differs from the prior art. For the operation and procedures related to EAS discovery with dynamic setup of an LBO PDU Session according to the example in Figure 7, reference may be made to 3GPP TS 23.700-48 V0.3.0.

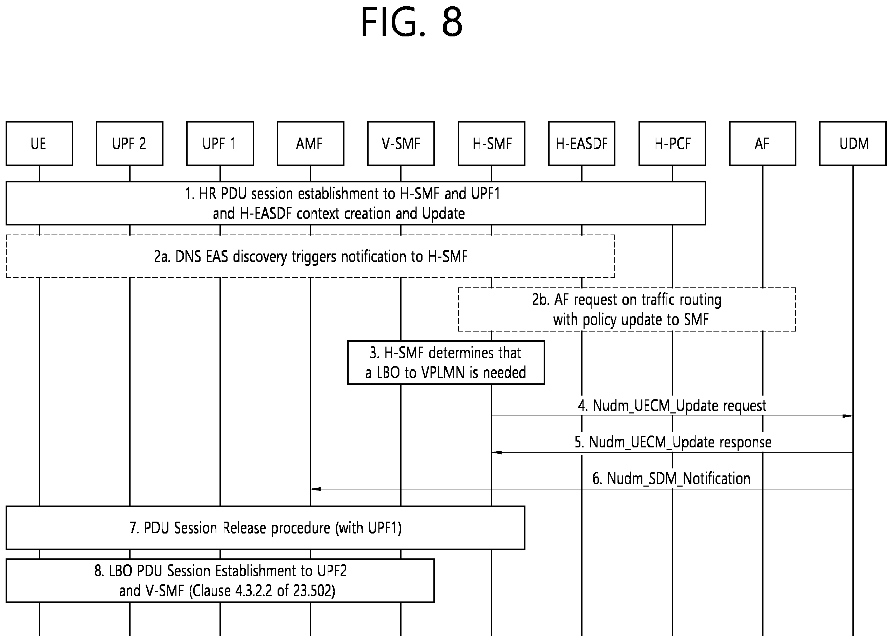

Referring now to FIG. 8, a first example of an aspect of the present disclosure is described below. The first example of the disclosure may include supporting dynamic LBO mode PDU session switching via UDM. For example, dynamic LBO mode PDU session switching may be supported based on communication with the UDM.

How to support dynamic LBO mode PDU session switching, regardless of whether the Serving AMF supports LBO authorized (or authorization) indication, is described. Note that in this context, whether or not the Serving AMF supports LBO authorized (or authorization) indication may be synonymous with whether or not it supports the capability related to dynamic LBO mode PDU session switching (e.g., the capability to identify LBO authorization indication and/or the capability to establish LBO PDU sessions after identification). For example, for more efficient edge computing, the H-SMF may notify the AMF via UDM as if the LBO Roaming Information in the SMF Selection Subscription data of the UE's subscriber information has changed. By doing so, the H-SMF can enable the AMF to perform the procedure to establish an LBO mode PDU Session.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

**FIG. 8** **illustrates an example of a procedure according to the first example of the disclosure.**

The example in FIG. 8 shows an example of an EAS discovery procedure using Nudm_UECM_Update Request/Response. For example, the example in FIG. 8 illustrates an example of an EAS discovery procedure (a procedure using Nudm_UECM_Update Request/Response) based on the dynamic setup of an LBO PDU session within a VPLMN.

We'll focus on the example in FIG. 8 and how it differs from FIG. 7. The operaitons common to FIGS. 8 and 7 may be performed as described in the example of FIG. 7.

4. The H-SMF may send a Connection Management (CM) update request message to the UDM. For example, the H-SMF may send a Nudm_UECM_Update Request to the UDM to convey the Dynamic LBO Allowed indication and the DNN/S-NSSAI information corresponding to the existing Home-routed PDU Session of the UE. Here, the Dynamic LBO Allowed indication may be the information that requests/instructs the UDM to perform the operation in step 6. The H-SMF may send a Nudm_UECM_Update Request message to the UDM containing the Dynamic LBO Allowed indication and the DNN/S-NSSAI information corresponding to the existing Home-routed PDU Session of the UE.

5. The UDM may send a CM update response message to the H-SMF. The UDM may reply to the H-SMF by sending a response message to the Nudm_UECM_Update request.

6. Upon request of the H-SMF, the UDM may send a Nudm_SDM_Notification to the Serving AMF as if the LBO Roaming Information has been changed, without changing the SMF Selection subscription data of the existing UE's subscriber information. (passing the LBO roaming status for that DNN/S-NSSAI as allowed). For example, if the LBO Roaming Information has not actually changed, but the UDM has not added any new information, the UDM may send a Nudm_SDM_Notification message to the Serving AMF. AMFs that do not support LBO authorized (or authorization) indication can then release the existing HR PDU session and establish a new LBO mode PDU session. Note that the LBO Roaming Information may be the subscriber information included in the SMF Selection Subscription Data. The UDM may notify the SDM service (e.g., Nudm_SDM_Notification service operation) of changes in the subscriber information. The UDM may include information related to LBO roaming by DNN and/or S-NSSAI in the DNN information included in the SDM data. For example, the "lboRoamingAllowed" information may be used. This information may indicate whether local breakout is allowed for that DNN. The AMF may recognize and store the LBO Roaming Information in the SMF Selection subscription data as having been changed to allowed.

7. The H-SMF may release the existing PDU session to create the LBO PDU session. For example, the H-SMF may determine the switching to LBO mode based on steps 2a and/or 2b. Then, based on receiving the CM update response message from the UDM in step 5, the H-SMF may perform the operation of releasing the existing PDU session. The H-SMF may perform a PDU session release procedure based on Clause 4.3.4 of 3GPP TS 23.502 V17.5.0. For example, the SMF may transmit a PDU session release command message to the AMF, and the AMF may transmit a PDU session release command message to the UE over the RAN. Step 7 may be performed after the H-SMF receives notification from the UDM that the AMF has passed the LBO roaming status for the corresponding DNN/S-NSSAI to allowed. To perform dynamic LBO mode PDU session switching, the H-SMF releases an established home-routed PDU session. The H-SMF may send a PDU Session Release Command message to the UE. The H-SMF may set the Cause included in the PDU Session Release Command message to PDU Session re-establishment to the same DN is required. For example, if the UE receives a PDU Session Release Command with a Cause indicating that re-establishment to the same DN is required, the UE may establish a new PDU session ID and initiate the PDU session establishment procedure.

8. the PDU session establishment procedure may be performed. When the UE initiates the PDU session establishment procedure, the AMF selects the SMF, and the PDU session establishment procedure may be performed by the UE, the AMF, the selected SMF, and the like. The PDU session establishment procedure may be performed in the same manner as the examples in FIGS. 5 and 6. During the PDU session establishment procedure, the AMF may verify that the LBO roaming information in the SMF selection subscription data is allowed. Then, the AMF may select an SMF for the LBO PDU Session.

Based on the steps according to the example of FIG. 8, based on the subscriber information received by the AMF from the UDM, the AMF may update/store the LBO roaming information for the corresponding DNN/S-NSSAI in the UE's SMF Selection subscription data in the AMF. In this case, even if the serving AMF cannot identify the LBO authorized indication transmitted by the H-SMF, or the serving AMF does not receive it directly, the AMF may release the existing home-routed PDU session and establish a PDU session in LBO mode in the next request (e.g., a PDU session opening request sent by the UE for the same DNN/S-NSSAI as the existing HR PDU session).

If the H-SMF performs step 4 above, it may be because the serving AMF does not support or handle the indication related to LBO authorization (e.g., an indication that LBO is authorized for the next PDU Session establishment for this UE, DNN and S-NSSAI) provided by the H-SMF. For example, it may be because the serving AMF does not support the capability included in dynamic LBO mode PDU session switching (e.g., the capability to identify the LBO authorization indication and the capability to establish an LBO PDU session after identification). Of note, the indication related to LBO authorization may be an indication provided in the manner according to step 4 of FIG. 7. In the process of establishing the HR PDU Session, the H-SMF may recognize or determine whether the serving network (in particular, the serving AMF) is capable of supporting or processing the indication transmitted by the H-SMF. For example, if the AMF supports/handles the indication, it may need to provide information (e.g., supported feature, capability information, etc.) to the H-SMF indicating this. The AMF may, for example, include the information (e.g., supported feature, capability information, etc.) in a message to the SMF during the PDU session establishment procedure or the UE's registration procedure. In this case, if the information about the above support/processing is not provided to the H-SMF, the H-SMF may recognize/determine that the serving AMF does not support it.

The above procedure may be performed to support edge computing and does not perform any changes to the SMF Selection subscription data of the UE in the UDM in the Home PLMN.

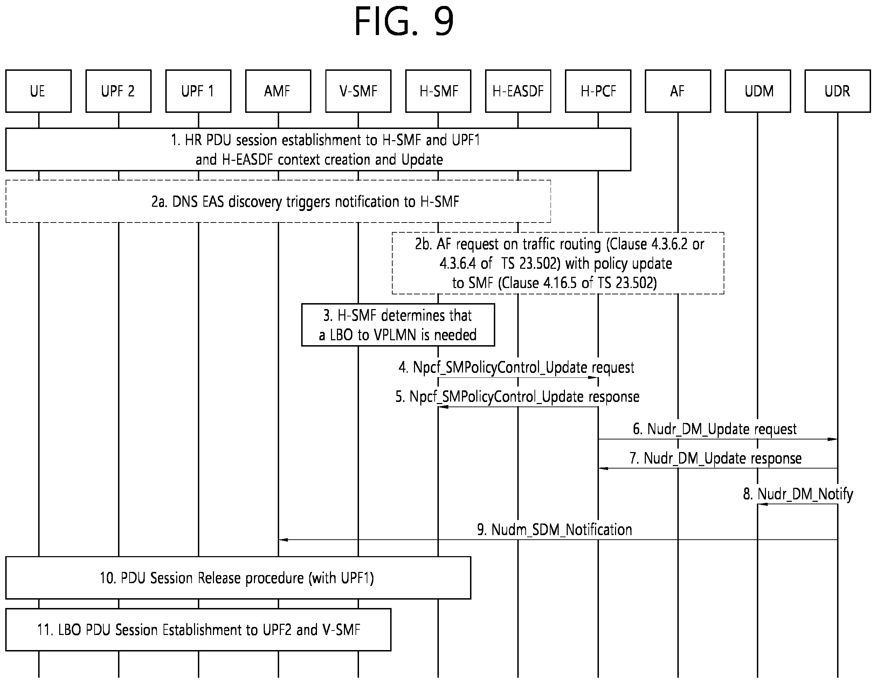

Hereinafter, with reference to FIG. 9, a second example of the disclosure is described.

A second example of the disclosure may be in some manner similar to the first example of the disclosure. For example, the second example of the present disclosure may include the AMF receiving a notification from the UDM via the H-PCF about a change in the UE's SMF Selection subscription data.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

FIG. 9 illustrates an example of a procedure according to the second example of the disclosure.

We'll focus on the example in FIG. 9 and how it differs from FIGS. 7 and 8. The operations common to FIG. 9 and FIGS. 7 and 8 may be performed as described in the examples of FIGS. 7 and 8.

4. The H-SMF may send a Session Management (SM) Policy Control Update Request message to the H-PCF. For example, the H-SMF may send the DNN/S-NSSAI information corresponding to the existing Home-routed PDU Session of the UE along with the Dynamic LBO Allowed indication (which may be interpreted as information requesting/instructing the UDM to perform the action in step 9) to the H-PCF via Npcf_SMPolicyControl_Update Request. The Dynamic LBO Allowed indication may be interpreted as information requesting/instructing the UDM to perform the action of step 9. In other words, the H-SMF may send an Npcf_SMPolicyControl_Update Request message to the H-PCF including the Dynamic LBO Allowed indication and the DNN/S-NSSAI information corresponding to the existing Home-routed PDU Session of the UE.

5. The H-PCF may reply to the H-SMF with an Npcf_SMPolicyControl_Update Response message.

In the example of FIG. 9, step 6 is shown to be performed after step 5 is performed, but this is for illustrative purposes only. For example, step 5 may be performed in parallel (e.g., simultaneously) with step 6.

6. the H-PCF requests a Nudr_DM_Update with the DNN/S-NSSAI information corresponding to the UE's existing Home-routed PDU Session along with the Dynamic LBO Allowed indication received from the H-SMF in the UDR.

7. The UDR transmits a Nudr_DM_Update Response to the H-PCF.

In the example of FIG. 9, step 8 is shown to be performed after step 7 is performed, but this is for illustrative purposes only. For example, step 7 may be performed in parallel (e.g., simultaneously) with step 8.

8. the UDR may forward the Nudr_DM_Notify message including the Dynamic LBO Allowed indication to the UDM as if the LBO Roaming Information has changed, without changing the SMF Selection subscription data in the existing UE's subscriber information. (e.g. UDR passes the LBO roaming status to allowed for the corresponding DNN/S-NSSAI)

9. the UDM may send Nudm_SDM_Notification to the AMF as if the LBO Roaming Information has changed, without changing the SMF Selection subscription data in the existing UE's subscriber information. The AMF may recognize and store the LBO Roaming Information in the SMF Selection subscription data as an allowed change.

10. the H-SMF may release the existing PDU session to create the LBO PDU session. Step 10 may be performed after the H-SMF receives notification from the UDM that the AMF has communicated to the H-SMF that the LBO roaming status for the corresponding DNN/S-NSSAI is allowed. The H-SMF may perform a PDU session release procedure based on Clause 4.3.4 of 3GPP TS 23.502 V17.5.0. For example, the SMF may transmit a PDU session release command message to the AMF, and the AMF may transmit a PDU session release command message to the UE over the RAN. To perform dynamic LBO mode PDU session switching, the H-SMF may perform the release of the established home-routed PDU session. The H-SMF may send a PDU Session Release Command message to the UE. The H-SMF may set the Cause included in the PDU Session Release Command message to PDU Session re-establishment to the same DN is required. For example, if the UE receives a PDU Session Release Command with a Cause indicating that re-establishment to the same DN is required, the UE may establish a new PDU session ID and initiate the PDU session establishment procedure.

11. The PDU session establishment procedure may be performed. When the UE initiates the PDU session establishment procedure, the AMF selects the SMF, and the PDU session establishment procedure may be performed by the UE, the AMF, the selected SMF, and so on. The PDU session establishment procedure may be performed in the same manner as the examples in FIGS. 5 and 6. During the PDU session establishment procedure, the AMF may verify that the LBO roaming information in the SMF selection subscription data is allowed. Then, the AMF may select an SMF for the LBO PDU Session.

In a similar manner as described in the example referring to FIG. 8, the operation of updating the LBO roaming information may be performed as if the LBO roaming information in the UE's SMF Selection subscription data is changed. In this way, dynamic LBO mode PDU session switching may be performed by updating the LBO roaming information, in which case the necessary information may be provided to the UDR via the H-PCF. For example, H-SMF may transmit the required information to the UDR via H-PCF.

As in the first example of the present disclosure, in the second example of the present disclosure, the procedure for establishing an LBO mode PDU Session may be performed even if the Serving AMF is unable to identify the LBO authorized indication transmitted by the H-SMF, or the Serving AMF does not receive the indication directly.

If the H-SMF performs step 4 above, it may be because the serving AMF does not support or handle the indication related to LBO authorization (e.g., an indication that LBO is authorized for the next PDU Session establishment for this UE, DNN and S-NSSAI) provided by the H-SMF. For example, it may be because the serving AMF does not support the capability included in dynamic LBO mode PDU session switching (e.g., the capability to identify the LBO authorization indication and the capability to establish an LBO PDU session after identification). Of note, the indication related to LBO authorization may be an indication provided in the method according to step 4 of FIG. 7. In the process of establishing the HR PDU Session, the H-SMF may recognize or determine whether the serving network (in particular, the serving AMF) is capable of supporting or processing the indication transmitted by the H-SMF. For example, if the AMF supports/handles the indication, the AMF may need to provide information (e.g., supported feature, capability information, etc.) to the H-SMF indicating this. The AMF may, for example, include the information (e.g., supported feature, capability information, etc.) in a message to the SMF during the PDU session establishment procedure or the UE's registration procedure. In this case, if the information about the above support/processing is not provided to the H-SMF, the H-SMF may recognize/determine that the serving AMF does not support the indication.

The above procedure does not perform any changes to the SMF Selection subscription data of the UE in the UDR/UDM in the Home PLMN.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

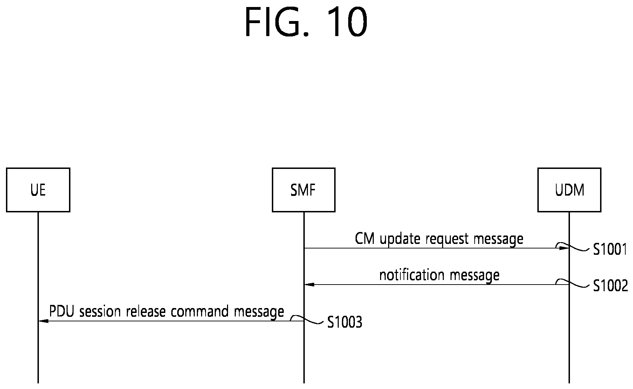

FIG. 10 illustrates an example of a procedure according to one embodiment of the disclosure.

It should be noted that the procedure shown in FIG. 10 is illustrative only, and the scope of the disclosure is not limited by the example in FIG. 10.

For example, for the example of FIG. 10, the operations described in the examples of FIGS. 7 through 9 may also be applied. For example, any operation, content, etc. described in the various examples of the disclosure may be applied, even if the operation, content, etc. is not directly described in the example of FIG. 10.

Before step S1001 is performed, a PDU session establishment procedure may be performed to establish a PDU session for the UE, as illustrated in the examples of FIGS. 5 and 6. For example, during the PDU session establishment procedure, the SMF may perform the operation of registering with the UDM.

If the AMF supports the capability related to the dynamic LBO, the AMF may transmit to the SMF the capability information related to the dynamic LBO from the AMF. For example, if the SMF does not receive the capability information related to the dynamic LBO from the AMF, the SMF may determine that the AMF does not support the capability related to the dynamic LBO from the AMF. Based on not receiving functional information related to the dynamic LBO from the AMF, the SMF may transmit information related to the dynamic LBO.

In step S1001, the SMF may send a CM update request message to the UDM. Here, the CM update request message may be a Nudm_UECM_Update request message. The CM update request message may include information related to the dynamic LBO and the DNN and S-NSSAI related to the PDU session.

The SMF may determine that LBO roaming to the VPLMN is required for a UE. Then, step S1001 may be performed.

In step S1002, the UDM may send a notification message to the SMF. Here, the notification message may be a Nudm_SDM_Notification message. The notification message may include LBO roaming information indicating that LBO roaming is allowed for the DNN and the S-NSSAI.

Based on the receipt of the information related to the dynamic LBO, the SMF selected subscriber data included in the subscriber information of the UE may remain unchanged, and the LBO roaming information may be included in the notification message.

In step S1003, the SMF may transmit a PDU session release command message to the UE. After the PDU session release procedure for the existing PDU session of the UE is completed, a PDU session establishment procedure may be performed to establish a new PDU session for LBO roaming. For example, based on the LBO roaming information being transmitted, after the PDU session is released, a PDU session establishment procedure may be performed to establish a PDU session related to LBO roaming. While the PDU session establishment procedure is performed, the AMF may select an SMF for the PDU session related to the LBO roaming based on the information that LBO roaming is allowed.

According to various examples of the present disclosure, for Dynamic LBO mode PDU session switching, the manner in which the H-SMF communicates the changed LBO roaming information to the serving AMF via UDR/UDM may be performed by extending existing service operations or by creating new service operations.

The changed LBO Roaming Information may be temporarily stored in the UDM/UDR in the Home PLMN (i.e. it may be stored/managed as separate information instead of changing the UE's subscriber information itself). As a result, the changed LBO Roaming Information may still be used if the UE is required to provide subscriber information to its serving PLMN. Subsequently, the changed LBO Roaming Information may be deleted when the UE's serving PLMN is changed, or the changed LBO Roaming Information may be referenced when making decisions/management about PDU sessions in situations such as changing the serving PLMN.

According to one embodiment of the disclosure, a UE in a roaming scenario may establish a connection with a 5G network via a home-routed PDU session. For example, a registration procedure of the UE and a PDU session establishment procedure may be performed. During these procedures, the serving AMF may receive the UE's SMF Selection subscription data from the UDM/UDR. The SMF Selection subscription data may include LBO roaming information. Based on the LBO Roaming Information, the serving AMF may allocate/designate/determine the PDU Session as Home-routed or LBO mode. For example, if the PDU Session Establishment Request message sent by the UE contains information that LBO Roaming is not supported for DNN/S-NSSAI, a Home-routed PDU session may be established.

In accordance with one embodiment of the disclosure, the H-SMF may determine to switch to dynamic LBO mode for an established home-routed PDU session. For example, the dynamic LBO mode PDU session switching may be determined based on a policy update request from the H-PCF due to an AF request causing traffic routing, or a DNS query report from the H-EASDF.

In accordance with one embodiment of the disclosure, an operation may be performed to change the LBO Roaming Information information for the corresponding DNN/S-NSSAI in the SMF Selection subscription data of the UE stored in the AMF of the serving PLMN. For example, in a manner similar to a conventional procedure for changing the UE's SMF Selection subscription data, one of the following examples may be performed:

For example, the H-SMF may send a Nudm_UECM_Update request message including DNN/S-NSSAI information and Dynamic LBO allowed indication to the UDM. The H-SMF may then cause the UDM to perform a Nudm_SDM_Notification procedure to the serving AMF, as if the LBO Roaming Information for the corresponding DNN/S-NSSAI had changed; and/or

In another example, the H-SMF may send an Npcf_SMPolicyControl_Update request message including DNN/S-NSSAI information and a Dynamic LBO allowed indication to the PCF. The PCF may then send a Nudr_DM_Update request message including the DNN/S-NSSAI information and the Dynamic LBO allowed indication to the UDR, which may cause the UDM to perform the following actions The UDM may perform the Nudm_SDM_Notification procedure to the serving AMF as if the LBO Roaming Information for that DNN/S-NSSAI has been changed.

In accordance with one embodiment of the disclosure, to perform dynamic LBO mode PDU session switching, an established home-routed PDU session release is performed. The H-SMF may transmit a PDU Session Release Command message to the UE. The H-SMF may set the Cause included in the PDU Session Release Command message to PDU Session re-establishment to the same DN is required.

According to one embodiment of the disclosure, for a PDU session establishment request message from a UE to establish a PDU session for the same DNN/S-NSSAI, the AMF may verify that the LBO roaming information in the SMF selection subscription data is allowed. Then, the AMF selects the SMF for LBO PDU Session and establishes the LBO mode PDU session.

According to various examples of the disclosure, the disclosure can have a variety of effects. For example, changed LBO Roaming Information may be communicated to the serving AMF for Edge Computing, regardless of whether the serving AMF identifies/supports the capability included in dynamic LBO mode PDU session switching (e.g., the capability to identify an LBO authorization indication and the capability to establish an LBO PDU Session after identification) and regardless of previously established SMF Selection subscription data. Based on this, Dynamic LBO mode PDU session switching may be performed.

For example, LBO Roaming Information for Dynamic LBO mode PDU session switching may be temporarily stored in the AMF within the Serving PLMN (e.g., stored/managed as separate information instead of changing the subscriber information of the UE within the Home PLMN). As a result, the LBO Roaming Information may still be used within the UE's serving PLMN. Subsequently, if the UE's serving PLMN is changed, the changed LBO Roaming information may be deleted, or the changed LBO Roaming information may be referenced when decisions/management related to the PDU session are performed in situations such as changing the serving PLMN. For Dynamic LBO mode PDU session switching, the way in which the H-SMF delivers the changed LBO roaming information to the serving AMF via UDR/UDM may be performed either by extending the existing service operation or by creating a new service operation.

The effects that may be derived from the specific examples of the present disclosure are not limited to those listed above. For example, there may be a variety of technical effects that a person having ordinary skill in the related art would understand or derive from the disclosure. Accordingly, the specific effects of the present disclosure are not limited to those expressly described herein, but may include a variety of effects that may be understood or induced from the technical features of the present disclosure.

For reference, the operation of the terminal (e.g., UE) described in the present specification may be implemented by the apparatus of FIGS. 1 to 4 described above. For example, the terminal (e.g., UE) may be the first device 100 or the second device 200 of FIG. 2. For example, an operation of a terminal (e.g., UE) described herein may be processed by one or more processors 102 or 202 . The operation of the terminal described herein may be stored in one or more memories 104 or 204 in the form of an instruction/program (e.g., instruction, executable code) executable by one or more processors 102 or 202 . One or more processors 102 or 202 control one or more memories 104 or 204 and one or more transceivers 105 or 206, and may perform the operation of the terminal (e.g., UE) described herein by executing instructions/programs stored in one or more memories 104 or 204.

In addition, instructions for performing an operation of a terminal (e.g., UE) described in the present disclosure of the present specification may be stored in a non-volatile computer-readable storage medium in which it is recorded. The storage medium may be included in one or more memories 104 or 204 . And, the instructions recorded in the storage medium may be executed by one or more processors 102 or 202 to perform the operation of the terminal (e.g., UE) described in the present disclosure.

For reference, the operation of a network node (e.g., AMF, SMF, UPF, PCF, EASDF, UDM, PCF, NEF, PCF/NEF, AF, UDR, etc.) or base station (e.g., (R)AN, NG-RAN, gNB, etc.) described herein may be implemented by the apparatus of FIGS. 1 to 3 to be described below. For example, a network node or a base station may be the first device 100 of FIG.2 or the second device 200 of FIG.2. For example, the operation of a network node or base station described herein may be processed by one or more processors 102 or 202. The operation of the terminal described herein may be stored in one or more memories 104 or 204 in the form of an instruction/program (e.g., instruction, executable code) executable by one or more processors 102 or 202. One or more processors 102 or 202 may perform the operation of a network node or a base station described herein, by controlling one or more memories 104 or 204 and one or more transceivers 106 or 206 and executing instructions/programs stored in one or more memories 104 or 204.

In addition, instructions for performing the operation of the network node or base station described in the present disclosure of the present specification may be stored in a non-volatile (or non-transitory) computer-readable storage medium. The storage medium may be included in one or more memories 104 or 204. And, the instructions recorded in the storage medium are executed by one or more processors 102 or 202, so that the operations of a network node or base station are performed.

In the, preferred embodiments have been exemplarily described, but the present disclosure of the present specification is not limited to such specific embodiments, and thus, modifications, changes, or may be improved.

In the exemplary system described above, the methods are described on the basis of a flowchart as a series of steps or blocks, but are not limited to the order of the steps described, some steps may occur in a different order or concurrent with other steps as described above. In addition, those skilled in the art will understand that the steps shown in the flowchart are not exclusive and that other steps may be included or that one or more steps of the flowchart may be deleted without affecting the scope of rights.

The claims described herein may be combined in various ways. For example, the technical features of the method claims of the present specification may be combined and implemented as an apparatus, and the technical features of the apparatus claims of the present specification may be combined and implemented as a method. In addition, the technical features of the method claim of the present specification and the technical features of the apparatus claim may be combined to be implemented as an apparatus, and the technical features of the method claim of the present specification and the technical features of the apparatus claim may be combined and implemented as a method.

## Claims

1. A method for performing communication, the method performed by a Unified Data Management (UDM) and comprising:
receiving a registration message related to a Packet Data Unit (PDU) session of a User Equipment (UE), from a Session Management Function (SMF);
receiving a Connection Management (CM) update request message from the Session Management Function (SMF),
wherein the CM update request message includes information related to a dynamic Local Breakout (LBO) and a Data Network Name (DNN) or Single Network Slice Selection Assistance Information (S-NSSAI) related to the PDU session; and
transmitting a notification message including LBO roaming information indicating that LBO roaming is allowed for the DNN and the S-NSSAI, to an Access and Mobility Management Function (AMF).

2. The method of claim 1,
wherein SMF selection subscriber data included in the UE's subscriber information is not changed, and the LBO roaming information inlcuded in the notification message, based that the information related to the dynamic LBO is received.

3. The method of claim 1 or 2,
wherein a PDU session establishment procedure is performed to establish a PDU session related to the LBO roaming after the PDU session is released, based on that the LBO roaming information is transmitted.

4. The method of any one of claims 1 to 3,
wherein the information that LBO roaming information is used by the AMF to select an SMF for a PDU session related to the LBO roaming.

5. A Unified Data Management(UDM) for performing communication, wherein the UDM comprising:
one or more transceivers;
one or more processors; and
one or more memory operably connectable to the one or more processor and storing instructions that, based on being executed by the at least one processor, the one or more processors adapted to perform operations comprising the method of any one of claims 1 to 4.

6. A method for performing communication, the method performed by a Session Management Function (SMF) and comprising:
transmitting a registration message related to a Packet Data Unit (PDU) session of a User Equipment (UE) to Unified Data Management (UDM);
determining that Local Breakout (LBO) roaming to a Visited Public Land Mobile Network (VPLMN) is required for the UE; and
transmitting a Connection Management (CM) update request message to the UDM,
wherein the CM update request message includes information related to the dynamic Local Breakout (LBO) and the Data Network Name (DNN) or Single Network Slice Selection Assistance Information (S-NSSAI) related to the PDU session,
wherein the information related to the dynamic LBO is used by the UDM to transmit a notification message inlcuding LBO roaming information indicating that LBO roaming is allowed for the DNN and the S-NSSAI to the Access and Mobility Management Function (AMF).

7. The method of claim 6,
based on that the information related to the dynamic LBO is transmitted, SMF selection subscriber data included in the subscriber information of the UE is not changed by the UDM, and the LBO roaming information is included in the notification message.

8. The method of claim 6 or 7, further comprising:
based on the LBO roaming information is transmitted, initiating a procedure for releasing the PDU session, in order to establish a PDU session related to LBO roaming.

9. The method of any one of claims 6 to 8,
based on that capability information related to the dynamic LBO is not received from the AMF, wherein the information related to the dynamic LBO is transmitted.

10. A Session Management Function (SMF) for performing communications, the SMF comprising:
one or more transceivers;
one or more processors; and
one or more computer memory operably connectable to the one or more processor and storing instructions that, based on being executed by the at least one processor, the one or more processors adapted to perform operations comprising the method of any one of claims 6 to 9.

11. A method for performing communication, the method performed by a user equipment (UE) and comprising:
transmitting a PDU session establishment request message related to a first packet data unit (PDU) session of the UE to a session management function (SMF);
receiving a PDU session establishment accept message from the SMF;
receiving from the SMF a PDU session release command message including cause information,
wherein the cause information includes information that a PDU session needs to be re-established with the same Data Network (DN) with a DN of first PDU session; and
transmitting a PDU session establishment request message for establishing a second PDU session to the SMF, based on the cause information.

12. A User Equipment (UE) for performing communications, the UE comprising:
one or more transceivers;
one or more processors; and
one or more computer memory operably connectable to the one or more processor and storing instructions that, based on being executed by the at least one processor, the one or more processors adapted to perform operations comprising the method of any one of claim 11.
